# EUROPÄISCHE PATENTANMELDUNG

(11) **EP 1 253 213 A2**
(43) Veröffentlichungstag der Anmeldung: **30.10.2002**
(21) Anmeldenummer: 02405232.6
(22) Anmeldetag: 26.03.2002
(51) Int. Cl.: C23C 4/18, H01M 8/12

(54) **Verfahren zum Herstellen einer keramischen Schicht mit elektrischen oder elektrochemischen Eigenschaften**

(30) Priorität: 23.04.2001 EP 01810390
(71) Anmelder: Sulzer Markets and Technology AG, 8401 Winterthur (CH)
(72) Erfinder: Damani, Rajiv Dr., 8404 Winterthur (CH); Kaiser, Andreas Franz-Josef, Dr., 8353 Elgg (CH)
(74) Vertreter: Sulzer Management AG

(57) **Zusammenfassung**

Das Verfahren zum Herstellen einer funktionalen keramischen Schicht (10) umfasst folgende zwei Schritte:

Es wird im ersten Schritt keramisches Beschichtungsmaterial in Pulver- oder Schlickerform auf ein Substrat aufgebracht und thermisch zu einer Rohschicht (1) verfestigt, beispielsweise mittels thermischem Spritzen oder einem Siebdruckverfahren und anschliessendem Sintern. Dabei weist das Beschichtungsmaterial hinsichtlich einer vorgesehenen Funktion der Schicht geeignete Eigenschaften auf. Die Funktion bezieht sich auf elektrische oder elektrochemische Eigenschaften.

Es wird im zweiten Schritt die Rohschicht durch eine Applikation so geändert, dass durch die Applikation Kapillarräume (2) der Rohschicht versiegelt werden und dabei die vorgesehene Funktion der gesamten Schicht verbessert wird. Dabei wird als Versiegelungsmittel (3) eine Flüssigkeit verwendet, die aus einem Lösungsmittel und mindestens einem darin enthaltenen Salz eines Metalls (Me) besteht, das thermisch in ein Metalloxid umwandelbar ist. Es wird das Versiegelungsmittel auf die Oberfläche (20) der Rohschicht aufgetragen. Ferner wird - nach Abwarten einer Penetration (30) in die Kapillarräume - das Lösungsmittel unter einer Wärmezufuhr bei zunehmender Temperatur (4) abgedampft und das Metall bei einer erhöhten Temperatur in das Metalloxid überführt.

## Beschreibung

Die Erfindung betrifft ein Verfahren zum Herstellen einer funktionalen keramischen Schicht sowie Anwendungen des Verfahrens für die Herstellung besonderer Schichten. Eine keramische Schicht ist in der Regel eine Beschichtung, die auf ein Substrat aufgebracht ist. Sie kann aber auch eine isolierte Membran sein, die beispielsweise mittels einem Bandgiessverfahren hergestellt ist. Unter keramischer Schicht sei auch eine Schicht verstanden, die ausser keramischen auch metallische Komponenten enthält.

Keramische Schichten oder Membranen können mittels diversen Verfahren hergestellt werden: a) aus einem pulverförmigen Beschichtungsmaterial und thermischem Spritzen (z. B. Plasmaspritzen, Flammenspritzen oder Detonationsbeschichten); b) durch Materialabscheidung aus der Dampfphase (PVD, EBPVD, CVD); c) mittels einem als Schlicker aufbereiteten Material und durch ein Bandgiess- oder Siebdruckverfahren mit anschliessendem Sintern. Schichten, die mit solchen Verfahren hergestellt sind, enthalten oft durch Poren und offene Rissstrukturen gebildete Kapillarräume, die eine vorgesehene Funktion der Schicht beeinträchtigen.

Ein Beispiel: die Hochtemperatur-Brennstoffzelle. In dieser werden auf einer elektrochemisch aktiven Membran Elektrodenreaktionen zur Erzeugung eines elektrischen Stroms durchgeführt; nämlich eine reduzierende Reaktion auf der Anode, bei der aus Wasserstoff und Kohlenmonoxid eines ersten Gasstroms Wasser bzw. Kohlendioxid entstehen; und eine oxidierende Reaktion auf der Katode, bei der aus molekularem Sauerstoff eines zweiten Gasstroms ionischer Sauerstoff O²⁻ - unter Aufnahme von Elektronen aus einem metallischen Leiter - gebildet wird. Die Sauerstoffionen bewegen sich durch einen Festelektrolyten, der die beiden Elektroden gasdicht trennt und der bei Temperaturen über 700 °C für die Sauerstoffionen leitend ist. Es erfolgt die reduzierende Anodenreaktion mit den Sauerstoffionen unter Abgabe von Elektronen an einen weiteren metallischen Leiter, der eine Verbindung zu einer benachbarten elektrochemisch aktiven Membran oder zu einem Batteriepol herstellt. Die elektrochemisch aktive Membran ist ein Mehrschichtensystem, bei deren Herstellung jede Schicht als Träger für eine oder mehrere benachbarte Schicht verwendet werden kann. Die Trägerschicht ist das Substrat, auf dem eine funktionale Schicht beispielsweise mit einem thermischen Spritzverfahren oder unter Anwendung eines Siebdruckverfahrens aufgebracht wird. Voraussetzung für ein einwandfreies Funktionieren der Brennstoffzelle ist, dass die Festelektrolytschicht gasdicht und für die Sauerstoffionen gut leitend ist.

Aufgabe der Erfindung ist es, ein Verfahren zu schaffen, das ausgehend von einem der oben genannten Verfahren die Herstellung einer keramischen Schicht ermöglicht, die eine verbesserte Funktion hinsichtlich elektrischer oder elektrochemischer Eigenschaften aufweist. Diese Aufgabe wird durch das im Anspruch 1 definierte Verfahren gelöst.

Das Verfahren zum Herstellen einer funktionalen keramischen Schicht umfasst folgende zwei Schritte:
Es wird im ersten Schritt keramisches Beschichtungsmaterial in Pulver- oder Schlickerform auf ein Substrat aufgebracht und thermisch zu einer Rohschicht verfestigt, beispielsweise mittels thermischem Spritzen oder einem Siebdruckverfahren und anschliessendem Sintern. Dabei weist das Beschichtungsmaterial hinsichtlich einer vorgesehenen Funktion der Schicht geeignete Eigenschaften auf. Die Funktion bezieht sich auf elektrische oder elektrochemische Eigenschaften.
Es wird im zweiten Schritt die Rohschicht durch eine Applikation so geändert, dass durch die Applikation Kapillarräume der Rohschicht versiegelt werden und dabei die vorgesehene Funktion der gesamten Schicht verbessert wird.

Dabei wird als Versiegelungsmittel eine Flüssigkeit verwendet, die aus einem Lösungsmittel und mindestens einem darin enthaltenen Salz eines Metalls besteht, das thermisch in ein Metalloxid umwandelbar ist. Es wird das Versiegelungsmittel auf die Oberfläche der Rohschicht aufgetragen. Ferner wird - nach Abwarten einer Penetration in die Kapillarräume - das Lösungsmittel unter einer Wärmezufuhr bei zunehmender Temperatur abgedampft und das Metall bei einer erhöhten Temperatur in das Metalloxid überführt.

Die abhängigen Ansprüche 2 bis 8 betreffen vorteilhafte Ausführungsformen des erfindungsgemässen Verfahrens. Anwendungsmöglichkeiten des erfindungsgemässen Verfahrens sind jeweils Gegenstand der Ansprüche 9 und 10.

Als Beschichtungsmaterial für eine thermische Spritzschicht kann beispielsweise eines der folgenden keramischen Materialien oder ein Gemisch dieser Materialien verwendet werden; nämlich Oxide der Metalle Me = Zr, Ce, Y, Al oder Ca. Als Versiegelungsmittel können - den Metallen Me entsprechend - wässrige Lösungen der Nitrate Me(NO₃)ₓ verwendet werden, mit x = 2 für Ca und x = 3 für Zr, Ce, Y oder Al. Die Metallnitrate sind in der Regel als kristalline Hydrate erhältlich, beispielsweise Ce(NO₃)₃•6H₂O, die gut in Wasser löslich sind. Schwermetallnitrate zersetzen sich bei erhöhten Temperaturen in die entsprechenden Oxide (beispielsweise Ce₂O₃) unter gleichzeitiger Bildung von gasförmigem NO₂. Die Umwandlungstemperatur, bei der sich die Oxidbildung ergibt, liegt zwischen rund 200°C bis 350°C. Mit Erhöhung der Temperatur reduziert sich die Behandlungszeit (beispielsweise 15 min bei 350°C, 10 min bei 400°C).

Nachfolgend wird die Erfindung anhand der Zeichnungen erläutert. Es zeigen:
- Fig. 1: einen Schnitt durch eine mittels Plasmaspritzen hergestellten Rohschicht, gezeichnet nach einem Bild, das mit einem Rasterelektronenmikroskop gemacht worden ist,
- Fig. 2: für eine Wärmebehandlung der Rohschicht ein Diagramm mit zeitlichen Profilen der Temperatur und des bei der Behandlung auftretenden Gewichtsverlusts,
- Fig. 3: eine schematische Darstellung einer Brennstoffzelle,
- Fig. 4: eine entsprechende Darstellung einer Zelle, mit der eine Hochtemperatur-Wasserelektrolyse durchführbar ist,
- Fig. 5: eine Darstellung einer weiteren Zelle, mit der sich reiner Sauerstoff aus Luft gewinnen lässt und
- Fig. 6: eine graphische Darstellung von Messresultaten zu einer Brennstoffzelle, deren Festelektrolyt nach dem erfindungsgemässen Verfahren hergestellt worden ist.

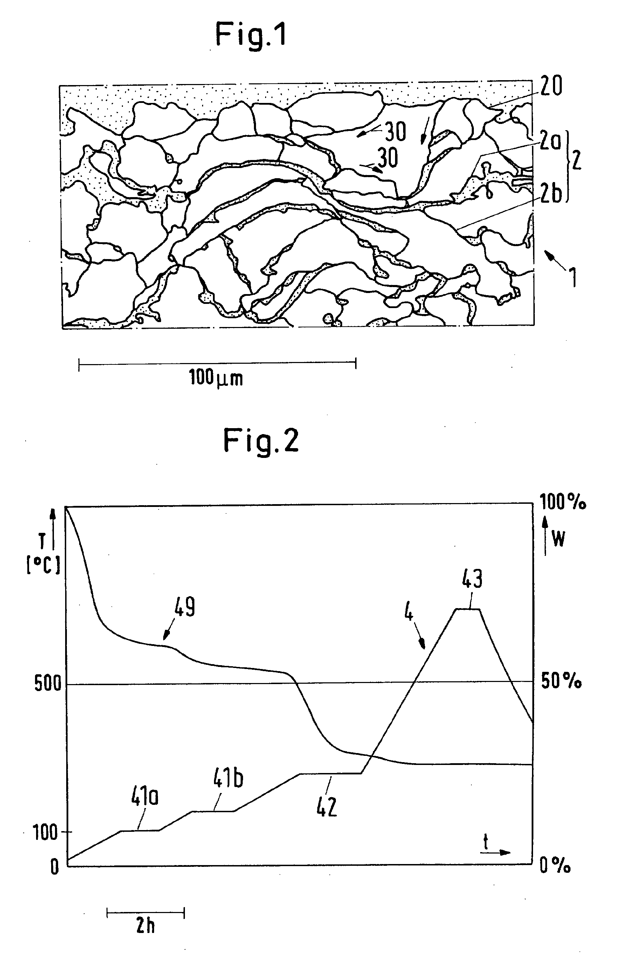

Die nach einem REM-Bild gezeichnete Schicht der Fig. 1 ist ungefähr um das 700-fache vergrössert dargestellt. Diese nur ausschnittsweise gezeigte Schicht ist eine Rohschicht 1 des erfindungsgemässen Verfahrens. Sie ist aus einem pulverförmigen, keramischen Material - nämlich YSZ, d.h. Zirkoniumoxid ZrO₂, das mit Yttrium Y stabilisiert ist - hergestellt, das mittels Plasmaspritzen zu einer thermisch verfestigten Schicht gebildet worden ist. Eine Rohschicht 1 lässt sich beispielsweise auch mit einem Siebdruckverfahren herstellen, wobei ein thermisches Verfestigen mittels Sintern erfolgt. Die Rohschicht 1 weist Kapillarräume 2 auf, die Poren 2a und Risse 2b umfassen.

Nach der Herstellung der Rohschicht 1 wird diese in einem zweiten Schritt durch eine Applikation so geändert, dass sich eine vorgesehene Funktion der gesamten Schicht verbessert. Durch die Applikation werden die Kapillarräume 2 versiegelt. Als Versiegelungsmittel 3 wird eine Flüssigkeit verwendet, die aus einem Lösungsmittel und mindestens einem darin enthaltenen oxidierbaren Metall Me, insbesondere Zirkonium Zr besteht. Die Metalle Me liegen in Form von Kationen vor; die entsprechenden Anionen sind anorganische Verbindungen, beispielsweise Nitrat NO3-, oder organische Verbindungen, beispielsweise Alkoholate und Acetate. Werden Alkoholate verwendet, so werden mit Vorteil Chelat-Liganden wie beispielsweise Acetylacetonat zugesetzt, welche die bezüglich Luftfeuchtigkeit bestehende Hydrolyseempfindlichkeit der Alkoholate stark erniedrigen. Dadurch wird ein Ausflocken der Oxide beim Versieglungsvorgang verhindert. Das Versiegelungsmittel 3 wird auf die Oberfläche 20 der Rohschicht 1 aufgetragen. Aufgrund von Kapillarkräfte dringt es in die Kapillarräume 2 ein: siehe die Pfeile, die eine Penetration 30 andeuten. Nach Abwarten der Penetration 30 des Versiegelungsmittels 3 in die Kapillarräume 2 wird eine Wärmebehandlung durchgeführt: Unter einer Wärmezufuhr bei zunehmender Temperatur wird das Lösungsmittel des Versiegelungsmittels 3 abgedampft; bei einer erhöhten Temperatur wird das Metall Me oxidiert (Me = Zr wird zu ZrO2 oxidiert; die Nitrationen reagieren zu NO2).

Das Versiegelungsmittel 3 ist mit Vorteil eine wässrige Lösung, die ein Salz des oxidierbaren Metalls Me gelöst enthält. Das oxidierte Metall ist in Wasser unlöslich. Das Metallsalz ist mit Vorzug ein Nitrat oder Acetat (oder ein Gemisch) der Metalle Me = Co, Mn, Mg, Ca, Sr, Y, Zr, Al, Ti und/oder eines Lanthanids, insbesondere eines der Lanthanide Ce, Eu oder Gd. Das Versiegelungsmittel 3 ist mit Vorteil eine gesättigte, feststofffreie Lösung, deren Viskosität bei 20°C kleiner als 150 mPa s, vorzugsweise kleiner als 35 mPa s ist.

Dem Versiegelungsmittel 3 wird mit Vorteil ein Tensid zugegeben, mit dem der Benetzungswinkel und die Oberflächenspannung dieser Flüssigkeit bezüglich dem Material der Rohschicht 1 geeignet reduziert wird, so dass sich eine möglichst grosse Penetrationstiefe ergibt und damit eine möglichst grosse Menge an Versiegelungsmittel in die Kapillarräume 2 eindringt.

Bei der Wärmebehandlung kann die Wärmezufuhr in einem thermischen Ofen, in einem Mikrowellenofen, mit einem Wärmestrahler, insbesondere einem Karbonstrahler mit einem Wellenlängenbereich von 2 - 3.5 µm, und/oder mit einer Flamme durchgeführt werden.

Für das Versiegeln ist im allgemeinen ein mehrmaliges Wiederholen der Versiegelungs-Applikation nötig. Die Applikation besteht jeweils aus einem Auftragen des Versiegelungsmittels 3 und der Wärmebehandlung, die anhand der Fig. 2 detailierter beschrieben wird:

Die Wärmezufuhr wird gemäss einem vorgegebenen zeitlichen Temperaturprofil 4 durchgeführt. Das Temperaturprofil 4 umfasst Intervalle, innerhalb derer die Temperatur jeweils zumindest angenähert auf einem Niveau 41a, 41b und 42 gehalten wird. Auf den ersten zwei Niveaus wird Lösungsmittel abgedampft. Das Abdampfen erfolgt auf dem ersten Niveau 41 a bei einer Temperatur T, bei der sich keine Dampfblasen bilden. Solche Blasen würden einen Teil des Versiegelungsmittel wieder aus den Kapillarräumen 2 hinaus treiben. Auf einem weiteren Niveau 42 wird die Schicht 1 ausgehärtet; es wird dabei das Metall Me bei einer Temperatur oxidiert, die grösser als eine von dem oxidierbaren Metall Me abhängigen Umwandlungstemperatur ist. Die Kurve 49 zeigt, wie sich das Gewicht w der Schicht 1 aufgrund von sich verflüchtigenden Bestandteilen des Versiegelungsmittels und der Umwandlung verringert. Nach Durchführung der Wärmebehandlung wird die Schicht 1 schliesslich noch einer höheren Temperatur auf einem Niveau 43 ausgesetzt, die der Betriebstemperatur der funktionalen Schicht 1 entspricht. Bei diesem Temperieren können sich neue Risse ausbilden, die bei einer weiteren Versiegelungsapplikation abgedichtet werden.

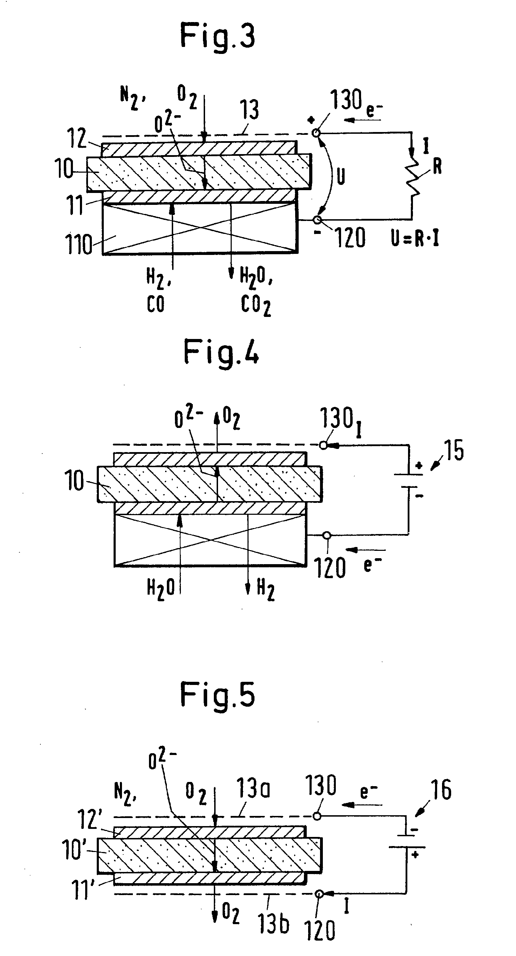

Das Ergebnis des erfindungsgemässen Verfahrens ist eine Schicht 10, die beispielsweise als Festelektrolyt in einer Hochtemperatur-Brennstoffzelle, siehe Fig. 3, verwendbar ist. Die Festelektrolytschicht 10 ist bei höheren Temperaturen (von mindestens rund 700 °C) eine ionenleitende Verbindung zwischen der Katode 12 und Anode 11. Die Anode 11 ist eine Randschicht einer gasdurchlässigen Trägerstruktur 110. Die Schicht 10 kann mittels eines Beschichtungsverfahren auf die Trägerstruktur 110 aufgebracht werden (es handelt sich dann um eine ASE-Zelle, "Anode Supported Electrolyte cell"). Mit Sauerstoff aus Luft (rund 20 % O₂, 80 % N₂) und den reduzierenden Gasen Wasserstof H₂ sowie Kohlenmonoxid CO wird in der Brennstoffzelle eine elektrische Spannung U und ein Strom I (bei einer Last R) erzeugt. Die Reaktionsprodukte sind H₂O und CO₂. Ein erster Pol 120 ist an die elektrisch leitende Trägerstruktur 110 angeschlossen. Ein zweiter Pol 130 steht mit einem Stromsammler 13 in Verbindung, der mit der Katode über eine Vielzahl von Kontaktstellen verbunden ist, über die Elektronen e⁻ in die Katode eingespeist werden.

Die Brennstoffzelle ist eine Spannungsquelle. Man kann ihre Funktion umkehren, indem man eine Spannungsquelle 15 aussen an die Pole 120 und 130 anlegt: siehe Fig. 4. Bei dieser Umkehrung lässt sich Wasserdampf, H₂O, mittels Elektrolyse in die Komponenten N₂ und O₂ aufspalten und diese Komponenten getrennt gewinnen.

Fig. 5 zeigt eine weitere Zelle, mit der sich aus Luft reiner Sauerstoff gewinnen lässt. Hier ist die Festelektrolytschicht als Membran 10' ausgebildet. Diese Membran 10' ist eine semipermeable Membran, durch die der Sauerstoff, der auf der Elektrode 12' in Ionen O²⁻ umgewandelt wird, unter der treibenden Kraft einer Spannungsquelle 16 transportiert und von den anderen Komponenten der Luft - überwiegend N₂- separiert wird. Auf der anderen Elektrode 11' werden die Sauerstoffionen wieder entladen und als reines Sauerstoffgas frei gesetzt. Die Pole 120 und 130 sind über elektrische Leiter 13a und 13b an die Elektroden 11', 12' angeschlossen.

Bei der oben genannten ASE-Zelle sind besondere Massnahmen vorzusehen, wenn die auf der Anode 11 aufgespritzte Elektrolytschicht 10 versiegelt wird. Vor der Durchführung des zweiten Schritts des erfindungsgemässen Verfahrens werden mit Vorteil Poren des Substrats, d.h. der Trägerstruktur 110, mit einem rückstandfrei entfernbaren Mittel gefüllt. Mittel dieser Art sind organische Stoffe, insbesondere Lacke oder Harze, die thermolytisch entfernbar sind und die sich bei der Wärmebehandlung des erfindungsgemässen Verfahrens verflüchtigen.

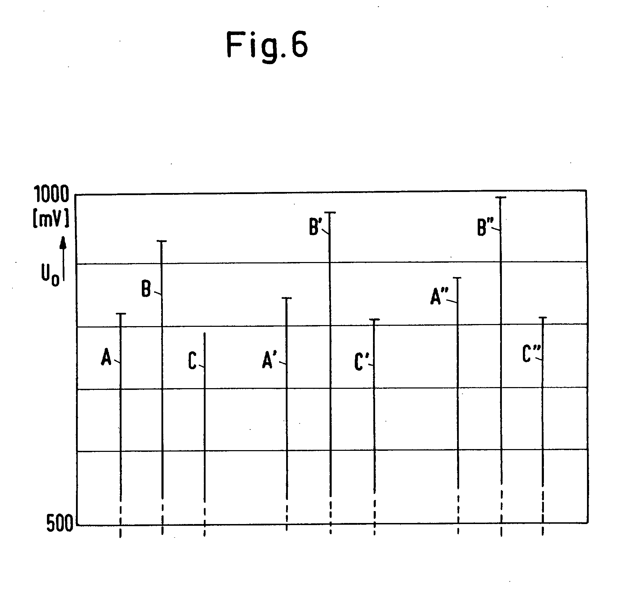

Dass eine Festelektrolytschicht aus YSZ aufgrund des erfindungsgemässen Verfahrens eine verbesserte lonenleitfähigkeit erhält, ist für verschiedene Versiegelungsmittel nachgewiesen worden. Resultate von Versuchen sind in Fig. 6 dargestellt:

Es wurde eine Brennstoffzelle mit dem zu untersuchenden Festelektrolyt hergestellt und für diese die Spannung U₀ bei isolierten Polen 120, 130 (Fig. 3) bestimmt, wobei reiner Wasserstoff als reduzierendes Gas mit verschiedenen Durchflussmengen verwendet worden ist. In Fig. 6 sind die Resultate für drei Durchflussmengen (Druckdifferenz zwischen Ein- und Ausgang jeweils 10, 20 bzw. 30 mm Wassersäule). Es wurde eine Referenzprobe (Messwerte A, A', A" entsprechend den verschiedenen Durchflussmengen) mit versiegelten Proben verglichen. Dabei wurde die Referenzprobe der gleichen Wärmebehandlung unterworfen wie die erfindungsgemäss behandelten Proben. Eine Versiegelung mit mit einem zirkoniumhaltigen Versiegelungsmittel, bei der die Versiegelungsapplikation mit einer Nitratlösung fünffach durchgeführt worden war, ergab positive Resultate (Messwerte B, B', B"); die Spannung U₀ nahm aufgrund einer verbesserten Ionenleitfähigkeit wesentlich zu. Ähnlich gute Resultate (nicht dargestellt) gewann man mit einer Ce-Versiegelung und Versiegelungen mit einem dotierten Ce bzw. einer alternierenden Verwendung von Ce- und Zrhaltigen Versiegelungsmitteln. Eine Versiegelung, bei der Al₂O₃ in den Kapillarräumen 2 gebildet wurde, ergab schlechtere Resultate (Messwerte C, C', C"). Der Grund für die Abnahme der Spannung U₀ ist, dass Al₂O₃ ein Isolator ist, der einen Transport von Sauerstoffionen behindert.

Das letztgenannte Ergebnis zeigt, dass das erfindungsgemässe Verfahren auch dazu angewendet werden kann, die Isolatoreigenschaft einer elektrisch isolierenden Schicht zu verbessern. Analog kann auch die elektrische Leitfähigkeit einer elektrisch leitenden Schicht verbessert werden.

## Patentansprüche

1. Verfahren zum Herstellen einer funktionalen keramischen Schicht (10), folgende zwei Schritte umfassend:
es wird im ersten Schritt keramisches Beschichtungsmaterial in Pulver- oder Schlickerform auf ein Substrat aufgebracht und thermisch zu einer Rohschicht (1) verfestigt - beispielsweise mittels thermischem Spritzen oder einem Siebdruckverfahren und anschliessendem Sintern -, wobei das Beschichtungsmaterial hinsichtlich einer vorgesehenen Funktion der Schicht geeignete Eigenschaften aufweist und die Funktion sich auf elektrische oder elektrochemische Eigenschaften bezieht;
es wird im zweiten Schritt die Rohschicht durch eine Applikation so geändert, dass durch die Applikation Kapillarräume (2) der Rohschicht versiegelt werden und dabei die vorgesehene Funktion der gesamten Schicht verbessert wird, wobei als Versiegelungsmittel (3) eine Flüssigkeit verwendet wird, die aus einem Lösungsmittel und
mindestens einem darin enthaltenen Salz eines Metalls (Me) besteht, das thermisch in ein Metalloxid umwandelbar ist, und wobei das Versiegelungsmittel auf die Oberfläche (20) der Rohschicht aufgetragen wird, ferner - nach Abwarten einer Penetration (30) in die Kapillarräume - das Lösungsmittel unter einer Wärmezufuhr bei zunehmender Temperatur (4) abgedampft und das Metall bei einer erhöhten Temperatur in das Metalloxid überführt wird.

2. Verfahren nach Anspruch 1, **dadurch gekennzeichnet, dass** das Versiegeln der Schicht (1) mittels ein- oder mehrmaligem Wiederholen der Applikation durchgeführt wird und die Applikation aus dem Auftragen des Versiegelungsmittels (3) sowie der Wärmezufuhr zum Erzielen der genannten Zwecke besteht.

3. Verfahren nach Anspruch 1, **dadurch gekennzeichnet, dass** die Wärmezufuhr gemäss einem vorgegebenen zeitlichen Temperaturprofil (4) durchgeführt wird, wobei das Temperaturprofil Intervalle umfasst, innerhalb derer die Temperatur jeweils zumindest angenähert auf einem Niveau (41a, 41b, 42) gehalten wird, auf einem ersten und gegebenenfalls zweiten Niveau (41a, 41b) Lösungsmittel, Kristallwasser und zugesetzte organische Additive abgedampft werden und auf einem weiteren Niveau (42) das Metallsalz in das Oxid überführt wird, bei einer Temperatur, die grösser als eine von dem Metallsalz abhängigen Umwandlungstemperatur ist.

4. Verfahren nach einem der Ansprüche 1 bis 3, **dadurch gekennzeichnet, dass** das Versiegelungsmittel (3) eine wässrige Lösung ist, die ein Salz des oxidierbaren Metalls (Me) gelöst enthält, das oxidierte Metall in Wasser unlöslich ist und das Metallsalz mit Vorzug ein Nitrat oder Acetat der Metalle Co, Mn, Mg, Ca, Sr, Y, Zr, Al, Ti und/oder eines Lanthanids ist, insbesondere eines der Lanthanide Ce, Eu oder Gd.

5. Verfahren nach einem der Ansprüche 1 bis 4, **dadurch gekennzeichnet, dass** das Versiegelungsmittel (3) eine gesättigte, feststofffreie Lösung ist, deren Viskosität bei 20°C kleiner als 150 mPa s, vorzugsweise kleiner als 35 mPa s ist.

6. Verfahren nach einem der Ansprüche 1 bis 5, **dadurch gekennzeichnet, dass** dem Versiegelungsmittel (3) ein Tensid zugegeben wird, mit dem der Benetzungswinkel und die Oberflächenspannung dieser Flüssigkeit bezüglich dem Material der Rohschicht (1) geeignet reduziert wird, so dass sich eine möglichst grosse Penetrationstiefe ergibt oder eine möglichst grosse Menge an Versiegelungsmittel, das in die Kapillarräume (2) eindringt.

7. Verfahren nach einem der Ansprüche 1 bis 6, **dadurch gekennzeichnet, dass** die Wärmezufuhr in einem thermischen Ofen, in einem Mikrowellenofen, mit einem Wärmestrahler, insbesondere einem Karbonstrahler mit einem Wellenlängenbereich von 2 - 3.5 µm, und/oder mit einer Flamme durchgeführt wird.

8. Verfahren nach einem der Ansprüche 1 bis 6, **dadurch gekennzeichnet, dass** vor der Durchführung des zweiten Schritts Poren des Substrats mit einem rückstandfrei entfernbaren Mittel, insbesondere einem organischen Stoff, gefüllt werden.

9. Anwendung des Verfahrens gemäss einem der Ansprüche 1 bis 8 zu einer Verbesserung der Ionenleitfähigkeit einer Festelektrolytschicht (10; 10'), beispielsweise der Leitfähigkeit von Sauerstoffionen im Festelektrolyt einer Hochtemperatur-Brennstoffzelle, eines Hochtemperatur-Sauerstofferzeugers oder eines Hochtemperatur-Elektroysegeräts.

10. Anwendung des Verfahrens gemäss einem der Ansprüche 1 bis 8 zu einer Verbesserung der elektrischen Leitfähigkeit einer elektrisch leitenden Schicht oder einer Verbesserung der Isolatoreigenschaft einer elektrisch isolierenden Schicht.
